# EUROPÄISCHE PATENTSCHRIFT

(11) **EP 0 411 357 B1**
(45) Veröffentlichungstag und Bekanntmachung des Hinweises auf die Patenterteilung: **07.12.1994**
(21) Anmeldenummer: 90113254.8
(22) Anmeldetag: 11.07.1990
(51) Int. Cl.: B01D 43/00

(54) **Vorrichtung zum Abtrennen einer Flüssigkeit von Feststoffpartikeln**
Apparatus for the separation of a fluid from solid particles
Dispositif pour séparer un fluide de particules solides

(30) Priorität: 01.08.1989 DE 3925458
(43) Veröffentlichungstag der Anmeldung: 06.02.1991
(73) Patentinhaber: Besitzgesellschaft Möller mbH, D-22087 Hamburg (DE)
(72) Erfinder: Möller, Joachim, D-2080 Pinneberg (DE); Voss, Hans-Joachim, Dr.-Ing., D-2117 Tostedt (DE); Mühlenfeld, Dietrich, Dipl.-Ing., D-2940 Wilhelmshaven (DE)
(74) Vertreter: Klingseisen, Franz, Dipl.-Ing.

(56) Entgegenhaltungen:
- AT-A- 353 726
- DE-A- 3 009 332

## Beschreibung

Die Erfindung betrifft eine Vorrichtung zum Abtrennen einer Flüssigkeit von Feststoffpartikeln nach dem Oberbegriff des Anspruchs 1.

Eine Vorrichtung dieser Art ist aus der DE-A-30 09 332 bekannt, wobei auf einer rotierenden Scheibe eine Anzahl von radialen Leitflächen vorgesehen ist, die sich gerade in radialer Richtung erstrecken. In der Mitte dieser Scheibe werden Sandteilchen aufgegeben, die durch diese Scheibe verteilt und radial nach außen gegen eine Prallfläche geschleudert werden, an der eine Trennung zwischen Festkörpern und Flüssigkeit allein durch Prallwirkung erfolgt. Hierdurch ergibt sich nur eine grobe Abtrennung dadurch, daß auf den Feststoffpartikeln eine Hüllschicht der Flüssigkeit verbleibt, insbesondere wenn es sich um eine gut haftende Flüssigkeit mit entsprechender Viskosität handelt.

Feststoffe, z.B. Bodenkonvolute, Tone oder Mischsande unterschiedlicher Körnung, können von flüssigen Stoffen unterschiedlicher Viskosität umhüllt, d.h. an der freien Oberfläche voll oder teilweise bedeckt sein. Eine solche Hüllschicht kann toxisch oder kontaminativ sein. Die Fest-Flüssig-Bindung ist abhängig von der artspezifischen Adhäsion und der Oberflächenspannung der jeweiligen Flüssigkeit.

Die Abtrennung einer flüssigen Kontamination von Feststoffpartikeln kann je nach Löslichkeit der Flüssigstoffe eluativ oder durch Waschvorgänge bei unterschiedlichen Temperaturen und z.B. auch unter Zusatz spezifischer Lösungsmittel vorgenommen werden, wobei aber immer nur ein unterschiedlich hoher Verdünnungseffekt erreicht wird, ohne daß die z.B. in der Waschflüssigkeit gelöste Kontamination restlos von der Oberfläche eines Feststoffpartikels abgetragen werden könnte. Es verbleibt immer eine dünne Hüllschicht von unterschiedlicher, ebenfalls artspezifischer Schichtstärke auf der Feststoffoberfläche, die im molekularen Bereich auf der Feststoffoberfläche haftet und aufgrund der Oberflächenspannung und Adhäsion der Flüssigkeit nicht gelöst werden kann.

Der Erfindung liegt die Aufgabe zugrunde, eine Vorrichtung der eingangs angegebenen Art so aus zubilden, daß Feststoffpartikel ohne großen Aufwand von einer dünnen Hüllschicht aus Flüssigkeit befreit werden können, die man allein durch Prallwirkung nicht abtrennen kann.

Erfindungsgemäß wird diese Aufgabe durch die Merkmale im kennzeichnenden Teil des Anspruchs 1 gelöst. Die mit einer Hüllschicht aus einer Flüssigkeit versehenen Feststoffpartikel werden auf eine hohe Geschwindigkeit beschleunigt und danach unter Prallwirkung umgelenkt. Aufgrund des unterschiedlichen elastischen Verhaltens von Flüssigkeit und Feststoffpartikel wird beim Aufprall eines Feststoffpartikels auf dessen der Aufprallstelle gegenüberliegenden Seite die Flüssigkeitsschicht aufgrund der auftretenden Zugkräfte in der Hüllschicht aufgerissen, worauf die Flüssigkeit aufgrund ihrer Oberflächenspannung unmittelbar dazu neigt, die im Verhältnis zum Volumen kleinste Oberfläche zu bilden, wobei sich die Flüssigkeitsschicht vom Feststoff löst und sich an der Prallfläche tropfenförmig anlegt, während der Feststoffpartikel von der Prallfläche abgelenkt wird. Hierbei ergibt sich ein differenzwegabhängiger Trennvorgang, mittels dem eine dünne Flüssigkeitsschicht wirksam von der Oberfläche eines Feststoffpartikels gelöst werden kann.

Vorteilhafte Ausgestaltungen der Erfindung sind in den weiteren Ansprüchen angegeben.

Eine beispielsweise Ausführungsform der Erfindung wird nachfolgend anhand der Zeichnung näher erläutert. Es zeigen
- Fig. 1: in schematischer Darstellung einen mit einer Hüllschicht versehenen Feststoffpartikel beim Auftreffen auf eine Prallfläche,
- Fig. 2: in schematischer Darstellung einen mit einer Hüllschicht versehenen Feststoffpartikel, der längs der Oberfläche einer Mitnehmerleiste eines Zentrifugalbeschleunigers entlanggleitet,
- Fig. 3: eine Schnittansicht des Rotors längs der Linie I-I in Fig. 4
- Fig. 4: einen schematischen Teilschnitt durch den Rotor, und
- Fig. 5: in einer Schnittansicht längs der Linie I-I in Fig. 4 die Austrittskante einer Mitnehmerleiste.

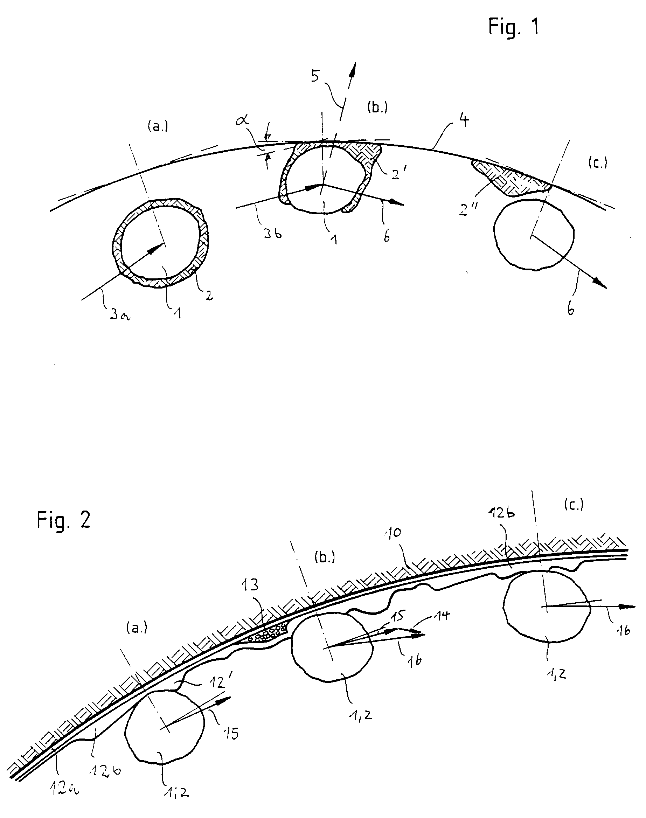

In Fig. 1 ist mit 1 ein Feststoffpartikel, beispielsweise ein Sandkorn, bezeichnet, das mit einer Hüllschicht 2 aus einer Flüssigkeit umgeben ist. Die Stärke dieser Hüllschicht 2 kann beispielsweise in der Größenordnung von 40 nm liegen und hängt von dem jeweiligen Flüssigkeitsmaterial, dessen Viskosität und dergleichen ab. Der Feststoffpartikel mit Hüllschicht ist in Richtung des Pfeiles 3 auf eine relativ hohe Geschwindigkeit beschleunigt (Zustand a)) und trifft in einem flachen Winkel auf eine bei dem dargestellten Ausführungsbeispiel gekrümmte Prallfläche 4 (Zustand b)), wobei in der Darstellung nach Fig. 1 davon ausgegangen ist, daß die Bewegungsbahn des Feststoffpartikels etwas gekrümmt ist, so daß sich der Richtungspfeil 3a in einen flacheren Winkel zur Tangente an der Prallfläche an der Auftreffstelle entsprechend dem Richtungspfeil 3b ändert. Beim Auftreffen auf der Prallfläche 4 erfährt die Hüllschicht 2 aus Flüssigkeit eine Beschleunigung in Richtung des gestrichelten Pfeiles 5, während der Feststoffpartikel 1 aufgrund seiner höheren Elastizität in Richtung des Pfeiles 6 abgelenkt wird. Die Beschleunigungsrichtung 5 der Flüssigkeitsschicht ist nahezu senkrecht auf die Prallfläche 4 gerichtet, so daß gegenüber der Auftreffstelle die Hüllschicht 2 aufgrund der darin auftretenden Zugkräfte aufreißt. Molekularadhäsion und Oberflächenspannung des flüssigen Materials bewirken eine spontane Verringerung der Verhältniszahl Oberfläche : Volumen, so daß sich die Flüssigkeit vom Feststoff löst, unterstützt durch das schiebeelastische Verhalten des Molekulargitters der Flüssigkeit wie bei 2′ angedeutet, und eine tropfenähnliche Form 2˝ bildet, während der von der Flüssigkeitsschicht vollständig befreite Feststoffpartikel 1 seinen Weg in Richtung des Pfeiles 6 fortsetzt. Der Flüssigkeitstropfen 2˝ bleibt im wesentlichen an der Prallfläche 4 haften und kann an dieser abfließen.

Vorzugsweise beträgt der Auftreffwinkel α weniger als 12°, um eine gute Trennwirkung zu erzielen. Die Größe der Feststoffpartikel kann unterschiedlich sein, wie dies z.B. bei Sand der Fall ist.

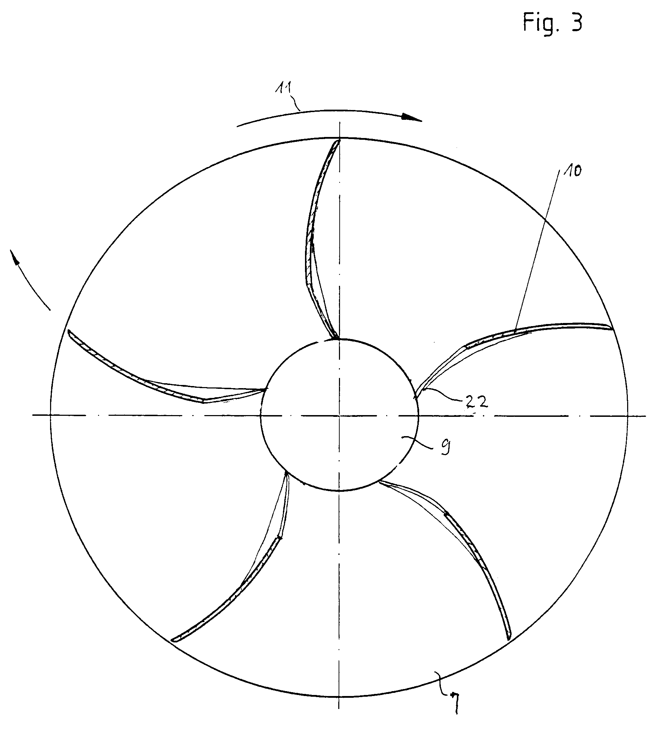

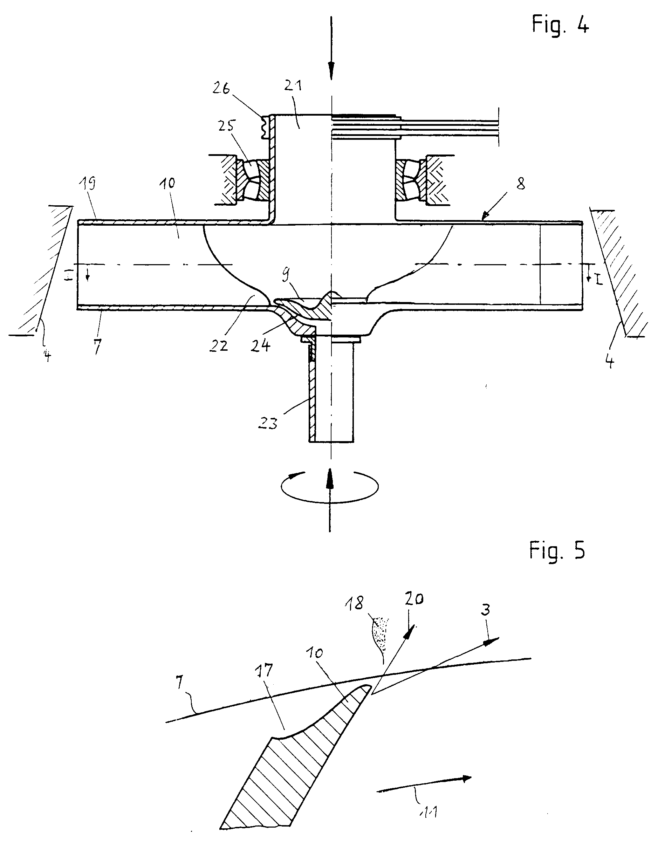

Der anhand der Fig. 1 beschriebene mechanische Trennvorgang kann auch an einer geraden Prallfläche 4 erzielt werden, indem die Aufprallgeschwindigkeit so eingestellt wird, daß die Bruchfestigkeit der Hüllschicht überschritten, jedoch der Feststoffpartikel nicht zertrümmert wird. Vorzugsweise wird eine ringförmige Prallfläche 4 in Verbindung mit einem Zentrifugalbeschleuniger vorgesehen, der in Fig. 3 und 4 schematisch dargestellt ist.

Fig. 3 zeigt in einem Schnitt längs der Linie I-I in Fig. 4 eine Draufsicht auf den scheibenförmigen Boden 7 eines Rotors 8, der ausgehend von einem zentralen Aufnahmebereich 9, auf den ein Fest-Flüssig-Gemenge von oben aufgetragen wird, radial nach außen verlaufende Mitnehmerleisten 10 aufweist, die in der Weise gekrümmt sind, daß die außen liegende Austrittskante in Drehrichtung (Pfeil 11) der innen liegenden Einlaufkante 22 vorauseilt. Die senkrecht von oben auf den Aufnahmebereich 9 des Rotors aufgebrachten Feststoffpartikel werden in horizontale Richtung umgelenkt und durch die Zentrifugalkraft radial nach außen bewegt, wobei sie an den Mitnehmerleisten 10 zum Anliegen kommen, auf denen durch gleichzeitige Zuführung einer Flüssigkeit eine Gleitschicht für die Feststoffpartikel ausgebildet wird.

Anhand von Fig. 2 wird der Gleitvorgang der Feststoffpartikel längs einer Mitnehmerleiste 10 näher erläutert. Die in Fig. 2 wiedergegebenen Feststoffpartikel 1 sind mit der abzutrennenden Hüllschicht 2 aus einer Flüssigkeit versehen, die in Fig. 2 im einzelnen nicht dargestellt ist. Die mit den Feststoffpartikeln auf den Rotor zusätzlich aufgebrachte Flüssigkeit, z.B. Wasser, bildet längs der Mitnehmerleiste 10 eine Gleitschicht 12a, 12b, auf der die Feststoffpartikel 1, 2 radial nach außen gleiten. Die Dicke der Gleitschicht 12a, 12b wird so ausgelegt, daß die äußere Teilschicht 12b der Gleitschicht eine Fließbewegung gegenüber der an der Oberfläche der Mitnehmerleiste 10 haftenden Teilschicht 12a ausführen kann. Andererseits wird die Gleitschicht 12 nicht so dick ausgelegt, daß darin die Feststoffpartikel 1, 2 eintauchen können. Durch die Inkompressibilität der die Gleitschicht bildenden Flüssigkeit ergibt sich bei der zentrifugalen Beschleunigung der Feststoffpartikel 1, 2 eine wellenähnliche Verdrängung der Flüssigkeit in Beschleunigungsrichtung, wodurch sich ein Anlaufkeil 12′ vor dem Feststoffpartikel 1, 2 bildet, der wie ein Kissen wirkt und ein Durchsacken des Feststoffpartikels auf die Oberfläche der Mitnehmerleiste 10 verhindert (Zustand a) in Fig. 2). Im weiteren Verlauf der Beschleunigungsbewegung erhöht sich die Geschwindigkeit des Oberflächenbereichs 12b der Gleitschicht gegenüber der an der Mitnehmerleiste 10 haftenden bzw. ruhenden Schicht 12a. Bei Erreichen einer ausreichenden Differenzgeschwindigkeit zwischen ruhender und fließender Gleitschicht wird innerhalb der Gleitschicht ein Unterdruckbereich 13 aufgebaut, in dem sich durch Dampfbildungen ein Hohlraum ausbildet, während gleichzeitig die Keilhöhe des Anlaufkeils 12′ abgebaut wird. Durch den Abbau des Anlaufkeils 12′ vor dem Feststoffpartikel und die Ausbildung des durch Hohlsogwirkung erzeugten Hohlraums 13 hinter dem Feststoffpartikel wird dieser zusätzlich beschleunigt (Zustand b) in Fig. 2), wie durch den Pfeil 14 schematisch dargestellt, der in Verbindung mit der Ausgangsgeschwindigkeit (Pfeil 15) des Feststoffpartikels zu einer höheren Geschwindigkeit (Pfeil 16) des Feststoffpartikels führt. Im weiteren Verlauf der Gleitbewegung des Feststoffpartikels 1, 2 auf der Gleitschicht 12 (Zustand c) in Fig. 2) gleitet der Feststoffpartikel mit erhöhter Geschwindigkeit in Richtung auf das radial außen liegende Ende der Mitnehmerleiste 10.

Dadurch, daß mit den Feststoffpartikeln 1, 2 dauernd Flüssigkeit, beispielsweise Wasser, auf den Rotor aufgebracht wird, wird die Gleitschicht 12 auf den Mitnehmerleisten 10 dauernd aufrechterhalten und kontinuierlich erneuert. Die geeignete Dicke der Gleitschicht 12 kann durch Verringerung oder Erhöhung der auf den Rotor aufgebrachten Wassermenge in der Weise ermittelt werden, daß sich für den Antrieb des Rotors bei einer vorgegebenen Drehzahl von beispielsweise 1.200 U/min ein instabiler Bereich der Leistungsaufnahme ergibt. Während in den Zuständen a) und c) in Fig. 2 eine konstante Antriebsleistung für den Rotor erforderlich ist, muß im Zustand b) für die Verdampfung der Flüssigkeit bei der Hohlsogbildung im Bereich 13 erhöhte Leistung aufgebracht werden. Zur Einstellung der geeigneten Dicke der Gleitschicht 12 wird deswegen der instabile Bereich der Leistungsaufnahme ermittelt und in diesem Bereich der Trennvorgang durchgeführt.

Fig. 5 zeigt das radial außen liegende Ende einer Mitnehmerleiste 10, das an der Prallfläche 4 in Richtung des Pfeils 11 entlangbewegt wird, wobei sich die Gleitschicht 12 von der Mitnehmerleiste ablöst. Durch den Pfeil 20 ist die Ablöserichtung der Gleitschicht und durch den Pfeil 3 die Ablöserichtung der Feststoffpartikel angedeutet, in der sie auf die Prallfläche 4 treffen, wie im einzelnen Fig. 1 zeigt.

Die Druckdifferenz an den Mitnehmerleisten bei vollständiger Flüssigkeitsbedeckung ist mit bekannten Rechenoperationen, z.B. der Laplace'schen Gleichung bestimmbar und führt zu mehreren Gruppen von Elementarlösungen, z.B. auf eine Belegung der Mitnehmerleisten mit Dipolen oder mit Wirbelelementen. Die Relativströmung in unmittelbarer Nähe der Oberfläche der Mitnehmerleisten ist mit Null anzunehmen. Die Ablösung der Gleitschichtströmung am Ende der Mitnehmerleiste führt nicht zu unmittelbarem Ausgleich der Druckdifferenz, wenn die abgelöste Gleitschicht in Verlängerung der Mitnehmerleiste durch Hohlsogbildung teilweise verdampft. Dieser Effekt ist üblicherweise unbestimmt. Die Berechnung wird dadurch erleichtert, daß die Mitnehmerleisten auf der Ober- und Unterseite von den Scheiben 7, 19 begrenzt und dadurch Kammern gebildet werden, die eine Linearisierung der induzierten Geschwindigkeiten und damit eine Vernachlässigung des Strahlunterdrucks ermöglichen. An der Austrittskante der Mitnehmerleisten wird ein Überkavitationsprofil 17 im wesentlichen durch eine Abschrägung von der Druck- auf die Saugseite vorgesehen. Hierdurch ergibt sich in dem Bereich 18 eine in der Ausrichtung vorbestimmte Hohlsogbildung.

Auf die im Kavitationsfeld 18 außerhalb des Endes der Mitnehmerleisten 10 auftretende Verdampfung folgt eine Kondensation. Die dabei auftretende Kondensationsvibration ergibt ein abrasive Wirkung zur Verhinderung einer möglichen Rekontamination der von ihrer Hüllschicht 2 befreiten Feststoffpartikel 1, wobei durch die Formgebung des Überkavitationsprofils 17 an der Austrittskante der Mitnehmerleiste 10 der Verlauf des Kavitationsfeldes 18 so vorbestimmt wird, daß die abrasive Wirkung der Kondensationsvibration in dem Bereich einer möglichen Rekontamination der Feststoffpartikel liegt.

Fig. 4 zeigt schematisch in einem Teilschnitt den Aufbau des Rotors 8, der auf der Oberseite in der Mitte mit einem hohlzylindrischen Zuführstutzen 21 für die Zuführung des Fest-Flüssig-Gemenges versehen ist. Der zentrale Aufnahmebereich 9 unter dem Zuführstutzen 21 ist mit einer Erhöhung in der Mitte und einem radial nach außen verlaufenden Profil versehen, damit das zugeführte Gemenge über den Umfang des Aufnahmebereiches 9 verteilt und der Einlaufkante 22 der Mitnehmerleisten 10 zugeführt wird. Die Mitnehmerleisten 10 sind im unteren Bereich radial nach innen vorgezogen, so daß die untere Einlaufkante 22 nahe dem Rand des tellerartig ausgebildeten zentralen Aufnahmebereiches 9 liegt. Wie Fig. 3 zeigt, ist die radial innen liegende Einlaufkante 22 in Drehrichtung etwas vorgezogen, damit die von dem Aufnahmebereich 9 durch Zentrifugalwirkung nach außen bewegten Feststoffpartikel zunächst auf die vorgezogene Einlaufkante 22 und danach kontinuierlich nach oben und außen auf die gesamte Fläche der Mitnehmerleiste 10 verteilt werden. Die Krümmungsform der Mitnehmerleisten 10 entspricht einer Sinusfunktion. Die in Fig. 3 wiedergegebene Krümmung der Mitnehmerleisten 10 würde in Verlängerung zur Mitte hin z.B. die senkrechte Diametrale vor der Mitte schneiden und rechts von der Mitte auf die horizontale Diagonale treffen, während das radial außen liegende Ende von links an der senkrechten Diametralen anliegt. Die untere Einlaufkante 22 ist zwar in Drehrichtung gegenüber dem Krümmungsverlauf der Mitnehmerleiste 10 etwas vorgezogen, sie liegt aber in Drehrichtung hinter der Austrittskante.

Der zentrale Aufnahmebereich 9 des Rotors 8 ist über einem von unten in der Mitte des Rotors angebrachten Zuführstutzen 23 angeordnet, von dem aus radial nach außen Kanäle 24 in Richtung auf die Einlaufkante 22 der Mitnehmerleisten führen. Durch diesen Zuführstutzen 23 wird Flüssigkeit für die Gleitschichtbildung eingeführt. Es kann auch zusätzlich Dampf eingeführt werden, um die Temperatur des von oben aufgebrachten Fest-Flüssig-Gemenges und insbesondere die Temperatur der die Gleitschicht 12 bildenden Flüssigkeit einzustellen. Durch die Wärmezufuhr kann die anhand von Fig. 2 erläuterte Hohlsogbildung zur Beschleunigung der Feststoffpartikel besser gesteuert werden.

Die um den Umfang des Rotors angeordnete Prallfläche 4 wird zweckmäßigerweise etwas kegelstumpfförmig ausgebildet, wie Fig. 4 zeigt, damit die auftreffenden Feststoffpartikel auch nach unten abgelenkt werden und die Flüssigkeitsteile bequem nach unten abgeführt werden können. Die Neigung kann im Bereich von 3°liegen.

Mit 25 ist eine Lagerung des Rotors 8 und mit 26 ein Riemenantrieb des Rotors in Fig. 4 dargestellt.

Die Fest-Flüssig-Trennung wird unterhalb des Rotors 8 in an sich bekannter Weise durch Flottenbildung stabilisiert.

Die mögliche Anzahl der Mitnehmerleisten 10 am Rotor 8 hängt im wesentlichen von dem Durchmesser des Aufnahmebereichs 9 ab, wobei zwischen den Einlaufkanten 22 aufeinanderfolgender Mitnehmerleisten ein ausreichender Abstand verbleiben muß, damit das Fest-Flüssig-Gemenge auf die einzelnen Mitnehmerleisten gelangen kann.

Es sind verschiedene Abwandlungen der beschriebenen Vorrichtung möglich. So kann der Rotor als einfache Scheibe mit radial verlaufenden Mitnehmerleisten ausgebildet sein. Die den Rotor 8 umgebende Prallfläche 4 kann als glatter Prallring ausgebildet sein. Es ist aber auch möglich, diese Prallfläche in ungerader Teilung gewellt auszubilden, wobei die maximale Wellensteigung 2° nicht übersteigt.

Dem aufgebrachten Fest-Flüssig-Gemenge kann Wärme zur Einstellung der geeigneten Temperatur in der Weise zugeführt, daß dem durch den Zentrifugalbeschleuniger geführten Luftstrom Dampf beigegeben wird.

Die die Gleitschicht bildende Flüssigkeit wird zweckmäßigerweise in Form von Druckwasser über eine doppelte Gleitringdichtung an dem unteren Zuführstutzen 23 zugeführt.

Die beschriebene Vorrichtung kann z.B. zur Aufbereitung von Kohleschlämmen für die Verstromung vorteilhaft eingesetzt werden.

## Patentansprüche

1. Vorrichtung zum Abtrennen einer Flüssigkeit von Feststoffpartikeln, umfassend
eine Scheibe (7) mit über den Umfang verteilten, radial nach außen verlaufenden Mitnehmerleisten (10), wobei in der Mitte der Scheibe ein Aufnahmebereich (9) für das Fest-Flüssig-Gemenge vorgesehen ist, und eine den Außenumfang der Scheibe umgebende Prallfläche (4),
**dadurch gekennzeichnet,**
daß die Mitnehmerleisten (10) radial nach außen gekrümmt ausgebildet sind, wobei die Austrittskante der Mitnehmerleisten der Einlaufkante in Drehrichtung vorauseilt.

2. Vorrichtung nach Anspruch 1,
dadurch gekennzeichnet,
daß unter dem Aufnahmebereich (9) ein Zuführstutzen (23) vorgesehen ist, von dem aus radial verlaufende Kanäle (24) bis nahe an die Einlaufkante (22) der Mitnehmerleisten (10) führen.

3. Vorrichtung nach den Ansprüchen 1 und 2,
dadurch gekennzeichnet,
daß die Mitnehmerleisten (10) auf der Oberseite mit einer scheibenförmigen Abdeckung (19) versehen sind.

4. Vorrichtung nach den Ansprüchen 1 bis 3,
dadurch gekennzeichnet,
daß die Austrittskante der Mitnehmerleisten (10) auf der Saugseite mit einem Überkavitationsprofil (17) versehen ist.

5. Vorrichtung nach Anspruch 3,
dadurch gekennzeichnet,
daß die Einlaufkante (22) der Mitnehmerleisten im unteren Bereich radial nach innen bis nahe an den Rand des Aufnahmebereichs (9) vorstehend ausgebildet und in Drehrichtung etwas vorgezogen ist, wobei die Einlaufkante im wesentlichen schräg nach oben und außen zur Abdeckung (19) verläuft.

## Claims

1. Apparatus for separating a fluid from solid particles, comprising a disk (7) with radially outwardly extending blades (10) distributed thereover, a receiving region (9) for the solid-fluid mixture being provided in the centre of the disk, and a baffle surface (4) which surrounds the outer circumference of the disk, characterised in that the driving blades (10) are radially outwardly curved, the outlet edge of the driving blades running ahead of the inlet edge, in the rotational direction.

2. A device according to claim 1, characterised in that a feed nozzle (23) is provided under the receiving region (9), from which radially extending channels (24) lead up to near the inlet edge (22) of the driving blades (10).

3. A device according to claims 1 and 2, characterised in that the driving blades (10) are provided, on the upper side, with a disk-shaped cover (19).

4. A device according to claims 1 to 3, characterised in that the outlet edge of the driving blades (10) is provided, on the suction side, with an excess cavitation profile.

5. A device according to claim 3, characterised in that the inlet edge (22) of the driving strips is constructed in the lower region so as to project radially inwardly up to near the edge of the receiving region (9) and is slightly pulled forward in the rotational direction, the inlet edge extending substantially at an angle in the upward and outward direction, relative to the cover (19).

## Revendications

1. Dispositif pour séparer un liquide de particules solides, comportant
un disque (7) avec des nervures d'entraînement (10) réparties sur la périphérie et qui s'étendent radialement vers l'extérieur, un domaine de réception (9) pour le mélange solide-liquide étant prévu au centre du disque et une surface d'impact (4) entourant la périphérie extérieure du disque, caractérisé en ce que les nervures d'entraînement (10) sont courbées radialement vers l'extérieur, l'arête de sortie des nervures d'entraînement précédant l'arête d'entrée dans le sens de rotation.

2. Dispositif selon la revendication 1, caractérisé en ce qu'il est prévu, sous le domaine de réception (9), une tubulure d'amenée (23) de laquelle des canaux (24), qui s'étendent radialement, conduisent jusqu'à proximité de l'arête d'entrée (22) des nervures d'entraînement (10).

3. Dispositif selon les revendications 1 et 2, caractérisé en ce que les nervures d'entraînement (10) sont munies sur le côté supérieur d'un couvercle (19) en forme de disque.

4. Dispositif selon les revendications 1 à 3, caractérisé en ce que l'arête de sortie des nervures d'entraînement (10) est munie sur le côté aspiration d'un profil de supercavitation (17).

5. Dispositif selon la revendication 3, caractérisé en ce que, dans le domaine inférieur, l'arête d'entrée (22) des nervures d'entraînement est en saillie radialement vers l'intérieur jusqu'à proximité du bord du domaine de réception (9) et est légèrement avancée dans le sens de rotation, l'arête d'entrée s'étendant sensiblement en biais vers le haut et vers l'extérieur en direction du couvercle (19).
